# EUROPEAN PATENT SPECIFICATION

(11) **EP 3 379 050 B1**
(45) Date of publication and mention of the grant of the patent: **08.12.2021**
(21) Application number: 18162334.9
(22) Date of filing: 16.03.2018
(51) Int. Cl.: F02B 23/10, F02B 31/02, F02B 31/00, F02F 3/26, F02B 23/06

(54) **INTERNAL COMBUSTION ENGINE**
VERBRENNUNGSMOTOR
MOTEUR À COMBUSTION INTERNE

(30) Priority: 22.03.2017 JP 2017055793
(43) Date of publication of application: 26.09.2018
(73) Proprietor: TOYOTA JIDOSHA KABUSHIKI KAISHA, Toyota-shi, Aichi-ken, 471-8571 (JP)
(72) Inventor: KOMORI, Satoshi, Toyota-shi, Aichi-ken, 471-8571 (JP); TANNO, Shiro, Toyota-shi, Aichi-ken, 471-8571 (JP)
(74) Representative: Winter, Brandl - Partnerschaft mbB

(56) References cited:
- EP-A1- 2 799 686
- DE-A1- 19 726 683
- DE-A1- 19 853 357
- JP-B2- 3 826 491
- US-A1- 2016 341 147
- US-B1- 6 223 715
- US-B1- 6 443 119
- US-B1- 6 443 122

## Description

### BACKGROUND OF THE INVENTION

### 1. Field of the Invention

The invention relates to an internal combustion engine.

### 2. Description of Related Art

When a swirl is generated in a cylinder, mixing between a fuel and air can be promoted, and thus the combustion state of an air-fuel mixture is improved. As a result, fuel economy can be improved. Known in this regard is a technique for adjusting the intensity of the swirl by adjusting the shape of an intake port such as a helical port and a tangential port in an internal combustion engine provided with a piston in which a cavity is formed (refer to, for example, Japanese Unexamined Patent Application Publication No. 2010-270737 (JP 2010-270737 A)).

Moreover, JP 3 8266491 B2 refers to a piston with a cavity that is eccentric to the piston. A stepped portion that connects a top surface of the piston and the cavity is a linear and steeply inclined flat surface.

US 6 443 119 B1 discloses a piston with and end face and a cavity, wherein the end face has a planar peripheral ring perpendicular to the central axis of the piston and a concace substantially bowl-shaped recess that is eccentrically disposed to the central axis.

In US 6 443 122 B1 a piston is disclosed that is displaceably mounted in a cylinder chamber. The top of the piston has an inclined surface portion leading to a ridge from which an inclined wall leads into a bowl-shaped cavity in the piston.

US 6 223 715 B1 shows a piston that has a generally planar head surface with a dome that is formed by a pair of generally planar, angularly upwardly inclined side surfaces which are bounded by generally curved surfaces that merge in rounded areas into an flat upper portion to complete the shape of the dome.

DE 197 26 683 A1 discloses a piston with a cavity that is of a rotating body shape which can be achieved from a hyperbolodial contour that is inclined to a central axis of the piston. This contour forms a ridge that is connected laterally flat and via an undercut with the bottom of the piston while the largest part of the cross sectional area of the cavity is eccentric to the piston.

Furthermore, US 2016/0341147 A1 describes a piston that includes a piston top structural unit and a piston skirt structural unit which both have a peripheral surface that is cylinder jacket shaped.

In DE 198 53 357 A1 a piston is disclosed that has a cavity with a bottom surface with a curved path which is departed into a first part bottom surface and a second part bottom surface while the radius of the first part bottom surface is larger than the one of the second part bottom surface while the latter one is more curved than the first part bottom surface.

In EP 2 799 686 B1 a cavity is arranged eccentrically from the cylinder center axis.

### SUMMARY OF THE INVENTION

It has been found that a smoke generation amount varies, even at the same swirl intensity, by inclination of the central axis of the swirl with respect to the central axis of the cylinder. It has also been found that the inclination of the central axis of the swirl varies with the intensity of the tumble component and the intensity of the inverse tumble component of intake air flowing into the cylinder and is affected by the shapes of a cylinder head and the cavity as well as the shape of the intake port. It has been found that the combustion state is improved by the inclination of the central axis of the swirl being reduced to the maximum extent possible and the smoke generation amount decreases as a result of the improvement of the combustion state.

The invention provides an internal combustion engine in which inclination of the central axis of a swirl with respect to the central axis of a cylinder is reduced.

An aspect of the invention relates to an internal combustion engine including an intake port formed on a cylinder head configured to generate a swirl, a tumble and/or an inverse tumble in a cylinder, an exhaust port formed on the cylinder head, and a piston. The piston includes a top surface which is orthogonal to a central axis of the piston provided in an upper portion of the piston, a cavity that is axially symmetrical and centered around the central axis of the piston and is provided from the top surface toward a lower portion of the piston around the central axis of the piston, and a connection surface being a curved or a flat surface inclined with respect to the top surface and being disposed between the top surface and the cavity while the connection surface is provided to be closer to a lower portion side of the piston than the top surface. An area of the connection surface projected on a plane parallel to the top surface is larger on an intake port side than on an exhaust port side wherein when the piston is divided into two with one plane passing through the central axis of the piston the intake port side refers to the side that includes the intake port and the exhaust port side refers to the side that includes the exhaust port. The connection surface is connecting an inner edge of the top surface and an upper end of a side surface of the cavity to each other. A central axis of a boundary line between the connection surface and the top surface has a circular or an elliptical shape and is eccentric to the intake port side with respect to the central axis of the piston. A bottom surface of the cavity is parallel to the top surface.

The upper portion of the piston is a part of the piston that is on a cylinder head side. The lower portion of the piston is a part of the piston that is on a crankshaft side. The inner edge of the top surface is a boundary between the top surface and the connection surface. An upper end of a wall surface of the cavity is a boundary between the wall surface of the cavity and the connection surface. The top surface is a flat surface provided in the upper portion of the piston (In the present specification, "flat" includes the meaning of "substantially flat"). The cavity is a space recessed from the top surface toward the lower portion of the piston. For example, the cavity is a space to which a fuel is injected. The connection surface is disposed between the inner edge of the top surface toward the lower portion of the piston. For example, the cavity is a space to which a fuel is injected. The connection surface is disposed between the inner edge of the top surface and the upper end of the side surface of the cavity. The connection surface is a surface connected to the inner edge of the top surface and is a surface provided to be closer to the lower portion side of the piston than the top surface. The connection surface may be a curved surface or a flat surface inclined with respect to the top surface.

A flow of intake air in the cylinder may contain a tumble component and an inverse tumble component. The tumble component and the inverse tumble component rotate in opposite directions in the cylinder. The tumble component flows from the intake port toward the exhaust port side mainly through the upper portion of the cylinder (that is, the cylinder head side in the cylinder). The inverse tumble component flows through the cylinder from the intake port and along the wall surface of the cylinder mainly at an almost vertical angle. Accordingly, the inverse tumble component flows toward the piston at an angle close to a right angle with respect to the top surface of the piston. When the connection surface is projected on a plane parallel to the top surface, the area of the top surface decreases as the projected area of the connection surface on the intake port side increases, and thus the amount of the inverse tumble component colliding with the top surface decreases and the amount of the inverse tumble component colliding with the connection surface increases. In a case where the inverse tumble component collides with the top surface of the piston, the intensity of the inverse tumble component is reduced, the inverse tumble component is dispersed, or the inverse tumble component is stagnant on the top surface because the inverse tumble component collides with the piston at an angle close to a right angle. In a case where the inverse tumble component collides with the connection surface, the inverse tumble component is likely to flow along the connection surface because the inverse tumble component collides with the piston at an angle smaller than a right angle. Accordingly, a reduction in the intensity of the inverse tumble component is suppressed in a case where the projected area of the connection surface on the intake port side is larger. Then, a larger amount of the inverse tumble component collides with the tumble component, and thus the intensity of the tumble component can be reduced by the inverse tumble component. Therefore, inclination of the central axis of the swirl attributable to the tumble component acting on the swirl can be suppressed. In this manner, inclination of the central axis of the swirl with respect to the central axis of the cylinder can be reduced.

In the internal combustion engine according to the aspect of the invention, the intake port may include a tangential port with a tangential intake valve and a helical port with a helical intake valve and the area of the connection surface on the intake port side projected on the plane parallel to the top surface may be larger on a tangential port side than on a helical port side wherein when the piston is divided into two with one plane passing through the central axis of the piston the tangential port side refers to the side that includes the tangential intake valve and the helical port side refers to the side that includes the helical intake valve.

In a case where the tangential port and the helical port are formed, the intensity of the tumble component of intake air flowing in from the tangential port is larger than the intensity of the tumble component of intake air flowing in from the helical port, and thus the intake air flowing in from the tangential port affects the inclination of the central axis of the swirl to a larger extent. Accordingly, a larger amount of the inverse tumble component from the tangential port is capable of colliding with the tumble component by the projected area of the connection surface on the tangential port side being increased, and thus the intensity of the tumble component can be further reduced. As a result, inclination of the central axis of the swirl with respect to the central axis of the cylinder can be reduced.

In the internal combustion engine according to the aspect of the invention, the intake port may include a tangential port, and a central axis of the inner edge of the top surface which is the centre of gravity may be misaligned to a tangential port side from the central axis of the piston.

In this case, the projected area of the connection surface on the tangential port side increases, and thus a reduction in the intensity of the inverse tumble component can be suppressed. As a result, the intensity of the tumble component becomes likely to be reduced by the inverse tumble component. In other words, inclination of the central axis of the swirl with respect to the central axis of the cylinder can be reduced. The shape of the inner edge of the top surface may not be a perfect circle. The central axis of the inner edge of the top surface in this case may be replaced with the center of gravity of the inner edge of the top surface.

In the internal combustion engine according to the aspect of the invention, the length of a horizontal direction component of the connection surface may be longer on the intake port side than on the exhaust port side, wherein the horizontal direction component is a component parallel to the top surface.

In the internal combustion engine according to the aspect of the invention, the height of the side surface of the cavity may be the same over an entire circumference of the cavity.

According to the aspect of the invention, the inclination of the central axis of the swirl with respect to the central axis of the cylinder can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a schematic configuration of an internal combustion engine according to an example;
FIG. 2 is a top view of a piston according to a first example;
FIG. 3 is a cross-sectional view of the piston taken along cutting line III-III of FIG. 2;
FIG. 4 is a diagram showing a time when an upper portion of the piston according to FIGS. 2 and 3 is projected on a plane parallel to a top surface;
FIG. 5 is a top view of the piston in a case where a central axis of a connection surface is on a central axis of the piston;
FIG. 6 is a cross-sectional view of the piston taken along cutting line VI-VI of FIG. 5;
FIG. 7 is a diagram showing a time when the upper portion of the piston according to FIGS. 5 and 6 is projected on a plane parallel to the top surface;
FIG. 8 is a diagram showing a flow of intake air in the piston illustrated in FIGS. 5 and 6;
FIG. 9 is a diagram showing the flow of the intake air in the piston illustrated in FIGS. 5 and 6;
FIG. 10 is a diagram showing the flow of the intake air in the piston illustrated in FIGS. 2 and 3;
FIG. 11 is a diagram showing the flow of the intake air in the piston illustrated in FIGS. 2 and 3;
FIG. 12 is a top view of a piston in which a valve recess is formed;
FIG. 13 is a diagram showing a time when an upper portion of the piston according to FIG. 12 is projected on a plane parallel to a top surface;
FIG. 14 is a top view of a piston according to a second example;
FIG. 15 is a diagram showing a time when an upper portion of the piston according to FIG. 14 is projected on a plane parallel to a top surface;
FIG. 16 is a diagram showing a time when a projected area of a connection surface on an intake port side illustrated in FIG. 15 is further separated into a projected area on a helical port side and a projected area on a tangential port side;
FIG. 17 is a top view of a piston in which a valve recess is formed; and
FIG. 18 is a diagram showing a time when an upper portion of the piston according to FIG. 17 is projected on a plane parallel to a top surface.

### DETAILED DESCRIPTION OF EMBODIMENTS

Hereinafter, embodiments of the invention will be illustratively described in detail based on examples with reference to accompanying drawings. The dimensions, materials, shapes, relative dispositions, and so on of the component parts described in the examples do not limit the scope of the invention unless otherwise noted.

### First Example

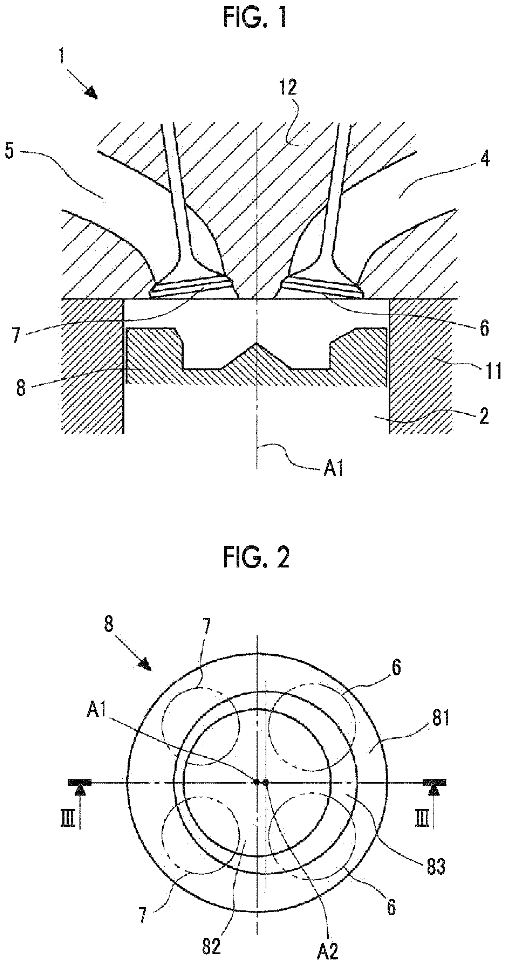

FIG. 1 is a diagram illustrating a schematic configuration of an internal combustion engine 1 according to a first example. In the first example, illustration of some components is omitted so that the internal combustion engine 1 is shown in a simple way. The internal combustion engine 1 is mounted in, for example, a vehicle.

A cylinder 2 is formed in a cylinder block 11 of the internal combustion engine 1. An intake port 4 and an exhaust port 5 are formed in a cylinder head 12 of the internal combustion engine 1. An intake valve 6 is provided in the cylinder 2 side end portion of the intake port 4. An exhaust valve 7 is provided in the cylinder 2 side end portion of the exhaust port 5. Two intake valves 6 and two exhaust valves 7 are disposed for each cylinder 2. Accordingly, each of the intake port 4 and the exhaust port 5 branches into two. At least one of the two intake ports 4 is formed to generate a swirl. The intake port 4 formed to generate the swirl is, for example, a helical port. At least one of the two intake ports 4 is formed to generate a tumble and an inverse tumble. The intake port 4 formed to generate the tumble and the inverse tumble is, for example, a tangential port. The shape of the intake port 4 is not limited thereto. The intake port 4 may have any shape insofar as the intake port 4 generates a swirl, a tumble, and an inverse tumble in the cylinder 2.

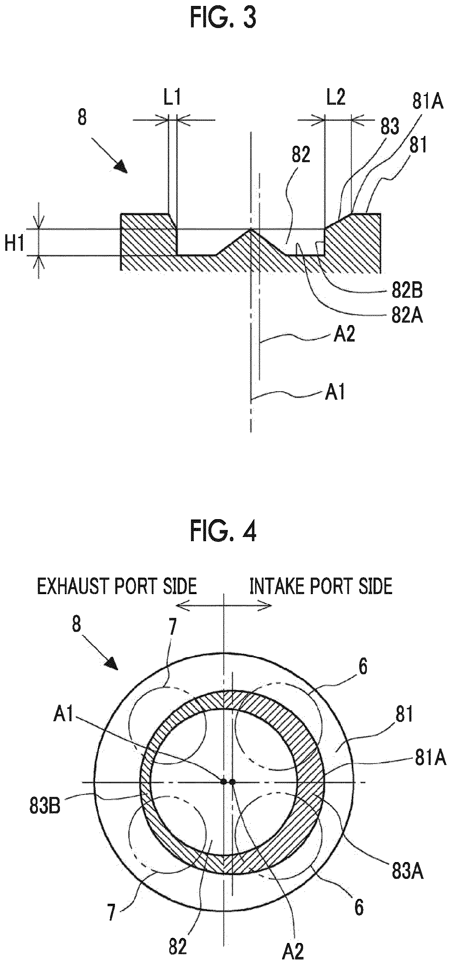

A piston 8 is disposed in the cylinder 2. FIG. 2 is a top view of the piston 8 according to the first example. FIG. 3 is a cross-sectional view of the piston 8 taken along cutting line III-III of FIG. 2. A top surface 81 of the piston 8 is a surface that is formed in the upper portion of the piston (that is, the cylinder head 12 side of the piston 8) and is a surface that is formed to be orthogonal to a central axis A1 of the piston 8. A cavity 82 recessed from the top surface 81 toward the lower portion of the piston 8 is formed around the central axis A1 of the piston 8. The cavity 82 is formed by a surface including a bottom surface 82A and a side surface 82B. The bottom surface 82A is a surface that is formed to be parallel to the top surface 81. The side surface 82B is a surface standing upright from the bottom surface 82A and is a cylindrical surface about the central axis A1. A connection surface 83 is formed between the top surface 81 and the cavity 82. The connection surface 83 is a surface inclined with respect to the central axis A1 of the piston 8. The connection surface 83 is a surface connecting the upper end of the side surface 82B and an inner edge 81A of the top surface 81 to each other. Although the connection surface 83 is a flat surface inclined with respect to the central axis A1 of the piston 8 in FIG. 3, the connection surface 83 may also be a curved surface instead of the flat surface. The shapes of the bottom surface 82A and the side surface 82B are not limited to the shapes illustrated in FIG. 3. For example, although the side surface 82B is formed to be parallel to the central axis A1 of the piston 8 in FIG. 3, the shape of the side surface 82B is not limited thereto and the side surface 82B may also be formed such that the inner diameter of the side surface 82B gradually decreases from the lower end of the side surface 82B toward the upper end of the side surface 82B. The side surface 82B in this case may be a curved surface. In a case where the side surface 82B is a curved surface, the place in the side surface 82B where the inner diameter of the side surface 82B is smallest may be the upper end of the side surface 82B. The bottom surface 82A and the side surface 82B may be gently connected to each other as well. Although the places where the intake valve 6 and the exhaust valve 7 are projected on the piston 8 are indicated by two-dot chain lines in FIG. 2, the places may also be where the cylinder 2 side end portions of the intake port 4 and the exhaust port 5 are projected.

The central axis A1 of the piston 8 in FIGS. 2 and 3 is the central axis of the cylinder 2 and the central axis of the cavity 82 as well. A2 in FIGS. 2 and 3 is the central axis of the boundary line between the connection surface 83 and the top surface 81. In the following description, A2 will be referred to as the central axis of the connection surface 83. In the first example, the boundary line between the connection surface 83 and the top surface 81 has the shape of a circle about the central axis A2 as illustrated in FIG. 2. However, the circle may not be a perfect circle. For example, the circle may be an ellipse. The boundary line may also have any shape other than a circular shape and an elliptical shape. In that case, the center of gravity may be on A2.

The connection surface 83 according to the first example is formed such that the area projected on a plane that is parallel to the top surface 81 is larger on the intake port 4 side (which may also be the intake valve 6 side) than on the exhaust port 5 side (which may also be the exhaust valve 7 side). In the following description, the connection surface 83 that is projected on a plane parallel to the top surface 81 will also be referred to as a "plane of projection" and the area of the connection surface 83 described below will also be referred to as a " projected area". FIG. 4 is a diagram showing a time when the upper portion of the piston 8 according to FIGS. 2 and 3 is projected on a plane parallel to the top surface 81. The area of the part that is indicated by hatching in FIG. 4 corresponds to the projected area, 83A corresponds to the projected area of the connection surface 83 on the intake port 4 side, and 83B corresponds to the projected area of the connection surface 83 on the exhaust port 5 side. The intake port 4 side refers to the side that includes the intake port 4 when the piston 8 is divided into two with one plane passing through the central axis A1 of the piston 8 such that the piston 8 is separated into the side that includes the intake valve 6 and the side that includes the exhaust valve 7. Likewise, the exhaust port 5 side refers to the side that includes the exhaust port 5 when the piston 8 is divided into two with one plane passing through the central axis A1 of the piston 8 such that the piston 8 is separated into the side that includes the intake valve 6 and the side that includes the exhaust valve 7. In the following description, the connection surface on the intake port 4 side will also be referred to as a range close to the intake port 4 and the connection surface on the exhaust port 5 side will also be referred to as a range close to the exhaust port 5.

It can be said that the central axis A2 of the connection surface 83 according to the first example is misaligned (eccentric) to the intake valve 6 side with respect to the central axis A1 of the piston 8. The length of the horizontal direction component of the connection surface differs on the intake port 4 side and the exhaust port 5 side to the same extent as the central axis A2 of the connection surface 83 is misaligned to the intake valve 6 side with respect to the central axis A1 of the piston 8. In other words, in FIG. 3, the length of the horizontal direction component of the connection surface 83 is relatively short as indicated by L1 on the exhaust valve 7 side and is relatively long as indicated by L2 on the intake valve 6 side. A height HI of the side surface 82B is the same in the entire cavity 82.

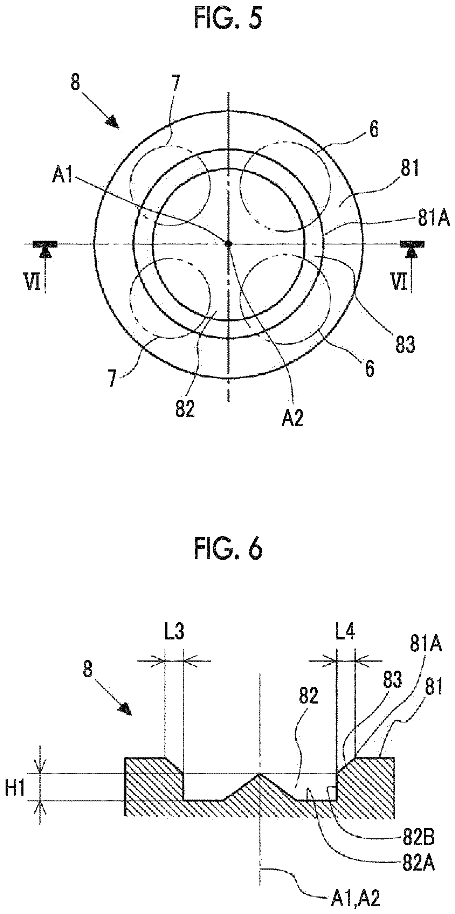

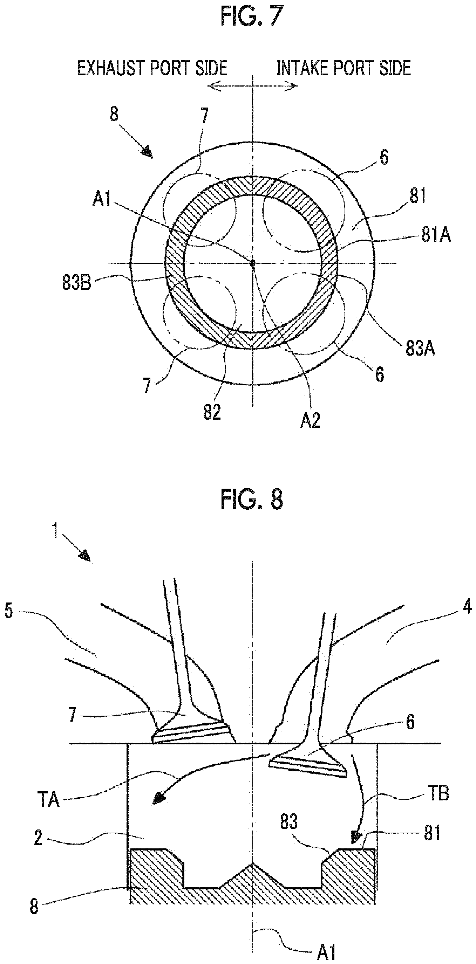

FIG. 5 is a top view of the piston 8 in a case where the central axis A2 of the connection surface 83 is on the central axis A1 of the piston 8. FIG. 6 is a cross-sectional view of the piston 8 taken along cutting line VI-VI of FIG. 5. FIG. 7 is a diagram showing a time when the upper portion of the piston 8 according to FIGS. 5 and 6 is projected on a plane parallel to the top surface 81. The area of the part that is indicated by hatching in FIG. 7 corresponds to the projected area, 83A corresponds to the projected area of the connection surface 83 on the intake port 4 side, and 83B corresponds to the projected area of the connection surface 83 on the exhaust port 5 side. In this case, the connection surface 83 has the same projected area on the intake valve 6 side and the exhaust valve 7 side. As illustrated in FIG. 6, a length L3 of the horizontal direction component of the connection surface 83 on the exhaust valve 7 side is equal to a length L4 of the horizontal direction component of the connection surface 83 on the intake valve 6 side. The height H1 of the side surface 82B is the same in the entire cavity 82.

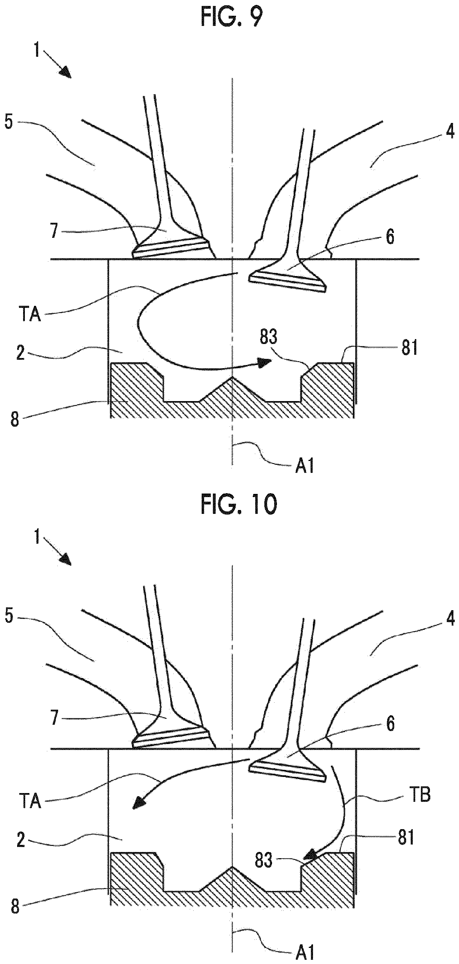

In the piston 8 illustrated in FIGS. 2 and 3 and the piston 8 illustrated in FIGS. 5 and 6, a difference in inverse tumble component intensity occurs due to the different shapes of the connection surface 83 described above. FIGS. 8 and 9 are diagrams showing the flow of intake air in the piston 8 illustrated in FIGS. 5 and 6. In FIGS. 8 and 9, TA represents a tumble component and TB represents an inverse tumble component. The tumble component TA is a flow from the intake port 4 toward the exhaust port 5 side and mainly through the upper portion of the cylinder 2, and the inverse tumble component TB is a flow from the intake port 4 and along the wall surface of the cylinder 2 and the main direction of the inverse tumble component TB is the vertical direction. A swirl is mainly a flow around the central axis of the cylinder 2. Since the main direction of the inverse tumble component TB is the vertical direction, the inverse tumble component TB collides with the top surface 81 of the piston 8 at an angle close to a right angle. Accordingly, the intensity of the inverse tumble component TB is likely to be reduced, the inverse tumble component TB is likely to be dispersed, and the inverse tumble component TB is likely to be stagnant on the top surface 81. Then, the tumble component TA becomes relatively stronger and mainly the flow of the tumble component TA remains in the cylinder 2 as illustrated in FIG. 9. The stronger the flow of the tumble component TA, the more inclined the central axis of the swirl with respect to the central axis A1 of the piston 8. Combustion state deterioration is likely to result from the inclination of the central axis of the swirl.

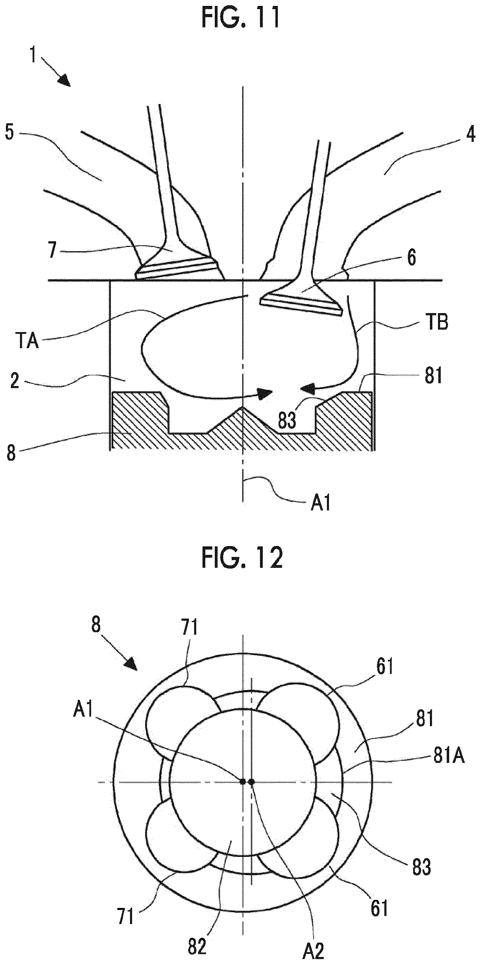

FIGS. 10 and 11 are diagrams showing the flow of intake air in the piston 8 illustrated in FIGS. 2 and 3. In a case where a projected area 83A of the connection surface 83 on the intake port 4 side is large, a larger amount of the inverse tumble component TB collides with the connection surface 83. In this case, the inverse tumble component TB collides with the connection surface 83 at an angle smaller than a right angle, and thus the inverse tumble component TB is likely to flow along the connection surface 83. Accordingly, a reduction in the intensity of the inverse tumble component TB is suppressed even after the inverse tumble component TB collides with the piston 8. Then, the tumble component TA and the inverse tumble component TB collide with each other and counteract each other as illustrated in FIG. 11. As a result, the intensity of the tumble component TA decreases, and thus inclination of the central axis of the swirl by the tumble component TA can be suppressed and combustion state deterioration can be suppressed.

An overall increase in the projected area of the connection surface 83 is conceivable as well. In that case, however, the intensity of the tumble component is not reduced with ease as the intensity of the tumble component also increases. As the area of the top surface 81 as a whole decreases, a squishing effect decreases. In the first example, in contrast, the projected area of the connection surface 83 on the exhaust port 5 side is relatively small, and thus the area of the top surface 81 on the exhaust port 5 side is large. As a result, the intensity of the tumble component can be reduced and a decline in squishing effect can be suppressed.

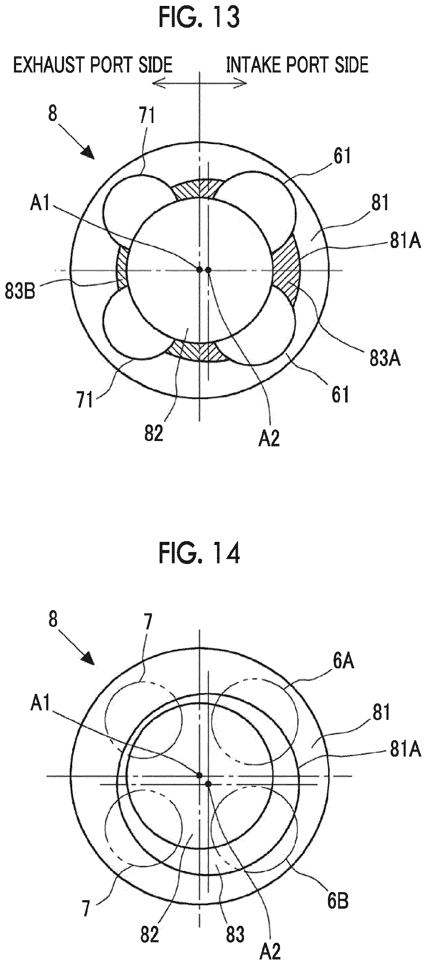

In some cases, a valve recess is formed in the piston 8. FIG. 12 is a top view of the piston 8 in which a valve recess is formed. FIG. 13 is a diagram showing a time when the upper portion of the piston 8 according to FIG. 12 is projected on a plane parallel to the top surface. The area of the part that is indicated by hatching in FIG. 13 corresponds to the projected area, 83A corresponds to the projected area of the connection surface 83 on the intake port 4 side, and 83B corresponds to the projected area of the connection surface 83 on the exhaust port 5 side. An intake valve recess 61 corresponding to each intake valve 6 and an exhaust valve recess 71 corresponding to each exhaust valve 7 are disposed in the piston 8. Even in this case, the connection surface 83 is formed such that the projected area 83A of the connection surface 83 on the intake port 4 side (which may also be the intake valve 6 side) is larger than the projected area 83B of the connection surface 83 on the exhaust port 5 side (which may also be the exhaust valve 7 side). Even in a case where the valve recess is formed in the piston 8 as described above, a reduction in the intensity of the inverse tumble component, dispersion of the inverse tumble component, and stagnation of the inverse tumble component on the top surface 81 can be suppressed by the area of the connection surface 83 in the range close to the intake valve 6 being relatively increased. As a result, the intensity of the tumble component TA can be reduced by the inverse tumble component TB.

In the first example, an increase in the projected area of the connection surface 83 results in the same degree of decrease in the area of the top surface 81. Accordingly, it can be said that the top surface 81 and the connection surface 83 are formed such that the area of the top surface 81 is smaller on the intake port 4 side than on the exhaust port 5 side.

As described above, according to the first example, inclination of the central axis of the swirl can be reduced by the projected area of the connection surface 83 being larger on the intake port 4 side (which may also be the intake valve 6 side) than on the exhaust port 5 side (which may also be the exhaust valve 7 side). As a result, combustion can be carried out well.

### Second Example

FIG. 14 is a top view of the piston 8 according to a second example. In the second example, one of the intake ports 4 is a helical port and the other intake port 4 is a tangential port. The helical port side intake valve 6 will be referred to as a helical intake valve 6A and the tangential port side intake valve 6 will be referred to as a tangential intake valve 6B. In the second example, the helical port is optional.

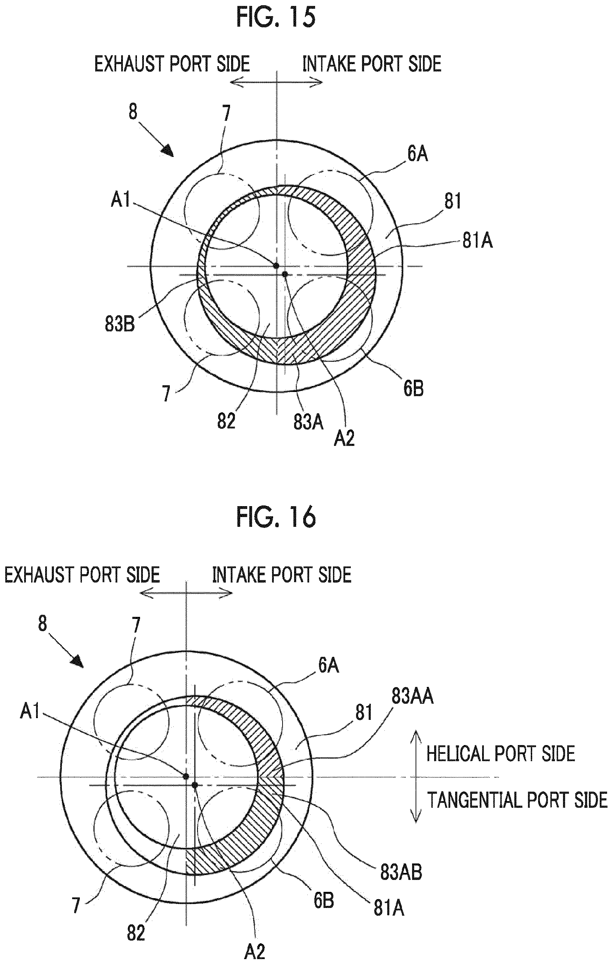

FIG. 15 is a diagram showing a time when the upper portion of the piston 8 according to FIG. 14 is projected on a plane parallel to the top surface 81. The area of the part that is indicated by hatching in FIG. 15 corresponds to the projected area, 83A corresponds to the projected area of the connection surface 83 on the intake port 4 side, and 83B corresponds to the projected area of the connection surface 83 on the exhaust port 5 side. The projected area of the connection surface 83 according to the second example is larger on the intake port 4 side (which may also be the intake valve 6 side) than on the exhaust port 5 side (which may also be the exhaust valve 7 side). FIG. 16 is a diagram showing a time when the upper portion of the piston 8 according to FIG. 14 is projected on a plane parallel to the top surface 81. FIG. 16 is a diagram showing a time when the projected area 83A of the connection surface 83 on the intake port 4 side illustrated in FIG. 15 is further separated into a projected area 83AA on the helical port side and a projected area 83AB on the tangential port side. In the second example, the projected area 83AB of the connection surface 83 on the tangential port side (that is, the tangential intake valve 6B side) is larger than the projected area 83AA of the connection surface 83 on the helical port side (that is, the helical intake valve 6A side). The helical port side refers to the side that includes the helical port (the helical intake valve 6A) when the piston 8 is divided into two with one plane passing through the central axis A1 of the piston 8 such that the piston 8 is separated into the side that includes the intake valve 6 and the side that includes the exhaust valve 7 and then the piston 8 is divided into four by the piston 8 being separated into the side that includes the helical intake valve 6A and the side that includes the tangential intake valve 6B with one plane orthogonal to the plane and passing through the central axis A1 of the piston 8. Likewise, the tangential port side refers to the side that includes the tangential port (the tangential intake valve 6B) when the piston 8 is divided into two with one plane passing through the central axis A1 of the piston 8 such that the piston 8 is separated into the side that includes the intake valve 6 and the side that includes the exhaust valve 7 and then the piston 8 is divided into four by the piston 8 being separated into the side that includes the helical intake valve 6A and the side that includes the tangential intake valve 6B with one plane orthogonal to the plane and passing through the central axis A1 of the piston 8. The second example is identical to the first example when it comes to the interpretation of the intake port 4 side and the exhaust port 5 side.

It can be said that the central axis A2 of the connection surface 83 according to the second example is misaligned (eccentric) from the central axis A1 of the piston 8 to the tangential intake valve 6B side (that is, the tangential port side). Since the central axis A2 of the connection surface 83 is misaligned with respect to the central axis A1 of the piston 8, the length of the horizontal direction component of the connection surface 83 on the tangential intake valve 6B side is relatively long. The height of the side surface 82B is the same in the entire cavity 82 as illustrated in FIG. 3. The inner edge 81A of the top surface 81 may have a shape other than a circular shape. In that case, the center of gravity of the shape may be on A2.

For example, 20% of the tumble component in the cylinder 2 is from intake air flowing in from the helical port and 80% is from intake air flowing in from the tangential port. Accordingly, a reduction in the intensity of the inverse tumble component from the tangential port needs to be suppressed for a reduction in the intensity of the tumble component. The intensity of the inverse tumble component from the tangential port can be increased by the projected area 83AB of the connection surface 83 on the tangential intake valve 6B side being relatively increased, and thus the intensity of the tumble component can be effectively decreased.

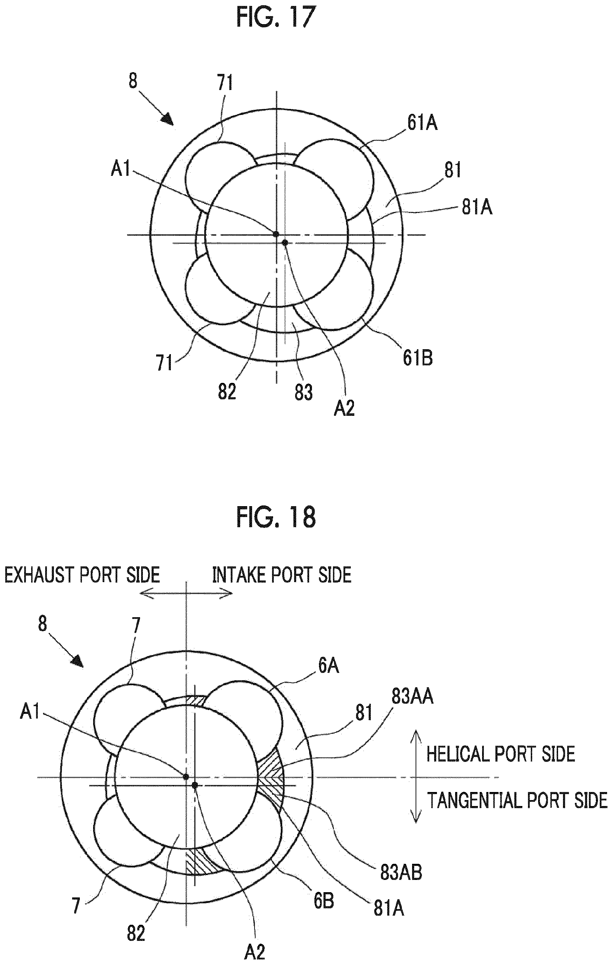

In some cases, a valve recess is formed in the piston 8. FIG. 17 is a top view of the piston 8 in which a valve recess is formed. A helical intake valve recess 61A corresponding to the helical intake valve 6A, a tangential intake valve recess 61B corresponding to the tangential intake valve 6B, and the exhaust valve recess 71 corresponding to each exhaust valve 7 are disposed in the piston 8. Even in this case, the projected area of the connection surface 83 is larger on the intake port 4 side (which may also be the intake valve 6 side) than on the exhaust port 5 side (which may also be the exhaust valve 7 side). FIG. 18 is a diagram showing a time when the projected area of the connection surface 83 on the intake port 4 side illustrated in FIG. 17 is separated into the projected area 83AA on the helical port side and the projected area 83AB on the tangential port side. The projected area 83AB of the connection surface 83 on the tangential port side (that is, the tangential intake valve 6B side) is larger than the projected area 83AA of the connection surface 83 on the helical port side (that is, the helical intake valve 6A side). Even in a case where the valve recess is formed in the piston 8 as described above, a reduction in the intensity of the inverse tumble component can be suppressed by the projected area 83AB of the connection surface 83 on the tangential intake valve 6B side being relatively increased. As a result, the intensity of the tumble component can be reduced by the inverse tumble component.

In the second example, an increase in the projected area of the connection surface 83 results in the same degree of decrease in the area of the top surface 81. Accordingly, it can be said that the area of the top surface 81 on the tangential intake valve 6B side is relatively small in the second example.

As described above, according to the second example, inclination of the central axis of the swirl can be reduced by the projected area of the connection surface 83 on the tangential intake valve 6B side being relatively increased. As a result, combustion can be carried out well. Since the projected area of the connection surface 83 on the exhaust port 5 side and the projected area of the connection surface 83 on the helical port side are relatively small, the intensity of the tumble component can be reduced and a decline in squishing effect can be suppressed.

## Claims

1. An internal combustion engine (1) comprising:
an intake port (4) formed on a cylinder head (12) configured to generate a swirl, a tumble and/or an inverse tumble in a cylinder (2);
an exhaust port (5) formed on the cylinder head (12); and
a piston (8), wherein:
the piston (8) includes a top surface (81) which is orthogonal to a central axis (A1) of the piston (8) provided in an upper portion of the piston (8), a cavity (82) that is axially symmetrical and centered around the central axis (A1) of the piston (8) and is provided from the top surface (81) toward a lower portion of the piston (8) around the central axis (A1) of the piston (8), and a connection surface (83) being a curved or a flat surface inclined with respect to the top surface (81) and being disposed between the top surface (81) and the cavity (82), while the connection surface (83) is provided to be closer to a lower portion side of the piston (8) than the top surface (81); and
an area of the connection surface (83) projected on a plane parallel to the top surface (81) is larger on an intake port (4) side than on an exhaust port (5) side wherein when the piston (8) is divided into two with one plane passing through the central axis (A1) of the piston (8) the intake port (4) side refers to the side that includes the intake port (4) and the exhaust port (5) side refers to the side that includes the exhaust port (5),
**characterized in that**
the connection surface (83) is connecting an inner edge of the top surface (81) and an upper end of a side surface (82B) of the cavity (82) to each other;
a central axis (A2) of a boundary line (81A) between the connection surface (83) and the top surface (81) has a circular or an elliptical shape and is eccentric to the intake port (4) side with respect to the central axis (A1) of the piston; and
a bottom surface (82A) of the cavity (82) is parallel to the top surface (81).

2. The internal combustion engine (1) according to claim 1, wherein:
the intake port (4) includes a tangential port with a tangential intake valve (6A) and a helical port with a helical intake valve (6B); and
the area of the connection surface (83) on the intake port (4) side projected on the plane parallel to the top surface (81) is larger on a tangential port side than on a helical port side, wherein
when the piston (8) is divided into two with one plane passing through the central axis (A1) of the piston (8) the tangential port side refers to the side that includes the tangential intake valve (6B) and the helical port side refers to the side that includes the helical intake valve (6A).

3. The internal combustion engine (1) according to claim 1, wherein:
the intake port (4) includes a tangential port; and
a central axis (A2) of the inner edge of the top surface (81) which is the centre of gravity is misaligned to a tangential port side from the central axis (A1) of the piston (8).

4. The internal combustion engine (1) according to any one of claims 1 to 3, wherein a length of a horizontal direction component of the connection surface (83) is longer on the intake port (4) side than on the exhaust port (5) side, wherein the horizontal direction component is a component parallel to the top surface (81).

5. The internal combustion engine (1) according to any one of claims 1 to 4, wherein a height of the side surface of the cavity (82) is the same over an entire circumference of the cavity (82).

## Patentansprüche

1. Verbrennungsmotor (1) mit:
einem Einlasskanal (4), der an einem Zylinderkopf (12) ausgebildet ist, der so konfiguriert ist, dass er in einem Zylinder (2) eine Wirbelströmung, eine Tumble-Strömung und/oder eine inverse Tumble-Strömung erzeugt;
einem Auslasskanal (5), der an dem Zylinderkopf (12) ausgebildet ist; und
einem Kolben (8), wobei:
der Kolben (8) eine obere Fläche (81), die orthogonal zu einer Mittelachse (A1) des Kolbens (8) ist und in einem oberen Abschnitt des Kolbens (8) vorgesehen ist, eine Vertiefung (82), die achssymmetrisch und um die Mittelachse (A1) des Kolbens (8) zentriert ist und von der oberen Fläche (81) zu einem unteren Abschnitt des Kolbens (8) um die Mittelachse (A1) des Kolbens (8) vorgesehen ist, und eine Verbindungsfläche (83) aufweist, die eine gekrümmte oder eine flache Fläche ist, die in Bezug auf die obere Fläche (81) geneigt ist und zwischen der oberen Fläche (81) und der Vertiefung (82) angeordnet ist, wobei die Verbindungsfläche (83) so vorgesehen ist, dass sie näher an einer Seite des unteren Abschnitts des Kolbens (8) ist als an der oberen Fläche (81); und
eine Fläche der Verbindungsfläche (83), die auf eine Ebene parallel zu der oberen Fläche (81) projiziert wird, auf einer Seite der Einlasskanal (4) größer ist als auf einer Seite der Auslasskanal (5), wobei, wenn der Kolben (8) in zwei Teile geteilt ist, wobei eine Ebene durch die Mittelachse (A1) des Kolbens (8) verläuft, die Seite der Einlasskanal (4) sich auf die Seite bezieht, die die Einlasskanal (4) aufweist, und die Seite der Auslasskanal (5) sich auf die Seite bezieht, die die Auslasskanal (5) aufweist,
**dadurch gekennzeichnet, dass**
die Verbindungsfläche (83) eine Innenkante der oberen Fläche (81) und ein oberes Ende einer Seitenfläche (82B) der Vertiefung (82) miteinander verbindet;
eine Mittelachse (A2) einer Grenzlinie (81A) zwischen der Verbindungsfläche (83) und der oberen Fläche (81) eine kreisförmige oder elliptische Form hat und zur Seite der Einlasskanal (4) in Bezug auf die Mittelachse (A1) des Kolbens außermittig angeordnet ist; und

2. Verbrennungsmotor (1) nach Anspruch 1, wobei:
der Einlasskanal (4) einen tangentialen Kanal mit einem tangentialen Einlassventil (6A) und einen spiralförmigen Kanal mit einem spiralförmigen Einlassventil (6B) aufweist; und
die Fläche der Verbindungsfläche (83) auf der Seite des Einlasskanals (4), wenn sie auf eine Ebene parallel zu der oberen Fläche (81) projiziert wird, auf der Seite des tangentialen Kanals größer ist als auf der Seite des spiralförmigen Kanals, wobei,
wenn der Kolben (8) in zwei Teile geteilt ist, wobei eine Ebene durch die Mittelachse (A1) des Kolbens (8) verläuft, sich die Seite des tangentialen Kanals auf diejenige Seite bezieht, die das tangentiale Einlassventil (6B) aufweist, und sich die Seite des spiralförmigen Kanals auf die Seite bezieht, die das spiralförmige Einlassventil (6A) aufweist.

3. Verbrennungsmotor (1) nach Anspruch 1, wobei:
der Einlasskanal (4) einen tangentialen Kanal aufweist; und
eine Mittelachse (A2) der Innenkante der oberen Fläche (81), die dem Schwerpunkt entspricht, von der Mittelachse (A1) des Kolbens (8) zur Seite des tangentialen Kanals versetzt ist.

4. Verbrennungsmotor (1) nach einem der Ansprüche 1 bis 3, wobei eine Länge einer horizontalen Richtungskomponente der Verbindungsfläche (83) auf der Seite des Einlasskanals (4) länger ist als auf der Seite des Auslasskanals (5), wobei die horizontale Richtungskomponente eine Komponente parallel zur oberen Fläche (81) ist.

5. Verbrennungsmotor (1) nach einem der Ansprüche 1 bis 4, wobei eine Höhe der Seitenfläche der Vertiefung (82) über des gesamten Umfang der Vertiefung (82) gleich ist.

## Revendications

1. Moteur à combustion interne (1) comprenant :
un orifice d'admission (4) formé sur une culasse (12) configurée pour générer un tourbillon, un tourbillon vertical et/ou un tourbillon vertical inverse dans un cylindre (2) ;
un orifice d'échappement (5) formé sur la culasse (12) ; et
un piston (8), dans lequel :
le piston (8) comprend une surface supérieure (81) qui est perpendiculaire à un axe central (A1) du piston (8) prévue dans une partie supérieure du piston (8), une cavité (82) qui est axialement symétrique et centrée sur l'axe central (A1) du piston (8) et est prévue depuis la surface supérieure (81) vers une partie inférieure du piston (8) autour de l'axe central (A1) du piston (8), et une surface de raccordement (83) qui est une surface courbe ou plane inclinée par rapport à la surface supérieure (81) et qui est disposée entre la surface supérieure (81) et la cavité (82), alors que la surface de raccordement (83) est prévue pour être plus près d'un côté de partie inférieure du piston (8) que la surface supérieure (81) ; et
une aire de la surface de raccordement (83) qui dépasse sur un plan parallèle à la surface supérieure (81) est plus grande sur un côté de l'orifice d'admission (4) que sur un côté de l'orifice d'échappement (5) où, quand le piston (8) est divisé en deux avec un plan passant par l'axe central (A1) du piston (8), le côté de l'orifice d'admission (4) se rapporte au côté qui comprend l'orifice d'admission (4) et le côté de l'orifice d'échappement (5) se rapporte au côté qui comprend l'orifice d'échappement (5),
**caractérisé en ce que**
la surface de raccordement (83) relie un bord intérieur de la surface supérieure (81) et une extrémité supérieure d'une surface latérale (82B) de la cavité (82) l'un à l'autre ;
un axe central (A2) d'une ligne de limite (81A) entre la surface de raccordement (83) et la surface supérieure (81) a une forme circulaire ou elliptique et est excentrée vers le côté de l'orifice d'admission (4) par rapport à l'axe central (A1) du piston ; et
une surface inférieure (82A) de la cavité (82) est parallèle à la surface supérieure (81).

2. Moteur à combustion interne (1) selon la revendication 1, dans lequel :
l'orifice d'admission (4) comprend un orifice tangentiel avec une soupape d'admission tangentielle (6A) et un orifice hélicoïdal avec une soupape d'admission hélicoïdale (6B) ; et
l'aire de la surface de raccordement (83) sur le côté de l'orifice d'admission (4) qui dépasse sur le plan parallèle à la surface supérieure (81) est plus grande sur un côté d'orifice tangentiel que sur un côté d'orifice hélicoïdal, où
quand le piston (8) est divisé en deux avec un plan passant par l'axe central (A1) du piston (8), le côté d'orifice tangentiel se rapporte au côté qui comprend la soupape d'admission tangentielle (6B) et le côté d'orifice hélicoïdal se rapporte au côté qui comprend la soupape d'admission hélicoïdale (6A).

3. Moteur à combustion interne (1) selon la revendication 1, dans lequel :
l'orifice d'admission (4) comprend un orifice tangentiel ; et
un axe central (A2) du bord intérieur de la surface supérieure (81) qui est le centre de gravité est désaxé vers un côté d'orifice tangentiel par rapport à l'axe central (A1) du piston (8).

4. Moteur à combustion interne (1) selon l'une quelconque des revendications 1 à 3, dans lequel une longueur d'une composante de direction horizontale de la surface de raccordement (83) est plus grande sur le côté de l'orifice d'admission (4) que sur le côté de l'orifice d'échappement (5), la composante de direction horizontale est une composante parallèle à la surface supérieure (81).

5. Moteur à combustion interne (1) selon l'une quelconque des revendications 1 à 4, dans lequel une hauteur de la surface latérale de la cavité (82) est la même sur une circonférence entière de la cavité (82).
